# EUROPÄISCHE PATENTANMELDUNG

(11) **EP 0 522 318 A2**
(43) Veröffentlichungstag der Anmeldung: **13.01.1993**
(21) Anmeldenummer: 92110100.2
(22) Anmeldetag: 16.06.1992
(51) Int. Cl.: H04L 12/56, H04Q 11/04, H04L 12/64

(54) **Vermittlungseinrichtung für digitale Signale im asynchronen und synchronen Übertragungsmodus**

(30) Priorität: 26.06.1991 DE 4121057
(71) Anmelder: ROBERT BOSCH GMBH, 70442 Stuttgart (DE)
(72) Erfinder: Sperlich, Josef, Dipl.-Ing., W-7150 Backnang (DE)

(57) **Zusammenfassung**

2. Die Vermittlungseinrichtung besitzt ein Koppelfeld erster Art (KF1.A) und ein Koppelfeld zweiter Art (KF2.A). Das Koppelfeld erster Art (KF1.A) vermittelt digitale Signale, die zu Diensten des verbindungsorientierten Modus gehören, im synchronen Übertragungsmode, und das Koppelfeld zweiter Art (KF2.A) vermittelt digitale Signale, die zu Diensten des verbindungslosen Modus gehören, im asynchronen Übertragungsmode.

## Beschreibung

Der Bedarf an Breitbanddiensten hat das International Telegraph and Telephone Consultative Committee (CCITT) in jüngster Zeit dazu veranlaßt, eine Reihe von Empfehlungen für ein breitbandintegriertes digitales Dienstleistungsnetz - kurz als B-ISDN bezeichnet - zu geben (vlg. CCITT, COM XVIII - R 34-E, Juni 1990). Diesen Empfehlungen des CCITT ist die Verwendung des asynchronen Übertragunsmodes - kurz mit ATM (Aynchronous Transfer Mode) bezeichnet - im B-ISDN Netz zu entnehmen. Der ATM-Mode erfordert die Vermittlung von in Zellen verpachter Information. die Zellen werden in vrituellen Kanälen (virtual channel VC), die durch eine gemeinsame Kennzeichnung (virtual channel identifier VCI) miteinander verbunden sind, übertragen und vermittelt. Mehrere virtuelle Kanäle können in einem virtuellen Pfad (virtual path VP) zusammengefaßt werden, der mit einer Kennzeichnung (virtual path identifier VPI) versehen ist. Der virtual channel identifier und der virtual path identifier sind in einem eigenen Bereich - header genannt - jeder Zelle enthalten.

Die Breitbanddienste werden in zwei Klassen unterteilt. Die einen werden im sogenannten "connection oriented mode" und die anderen im sogenannten "connectionless mode" übertragen und vermittelt. Für eine Vermittlung bedeutet dies, daß für virtuelle Verbindungen gemäß dem connection oriented mode für den Aufbau und die Bereitstellung der eigentlichen Nutzkanalverbindungen eine Signalisierungsprozedur auf bestehendem oder zu aktivierendem (virtuellem) oder gesondertem Signalisierungskanal vorangeht, mittels derer alle Modalitäten der Verbindung festgelegt werden. Dies trifft auch für den Abbau einer Verbindung, welche diesen Klassen zugeordnet ist, zu. Connectionless-Verbindungen sind aus LANs und Daten-Paketnetzen bekannt. Dort wird einem Datenblock eine Ziel- und Absenderadresse vorangestellt und der ganze Datenblock ohne Rücksicht darauf gesendet, ob im Augenblick eine durchgehende Verbindung zum Ziel vorhanden ist. Informationsverlust und längere Laufzeiten werden dabei in Kauf genommen.

Nach dem vorangehend genannten ATM-Mode ist die Übertragung von Diensten im synchronen Transfer Mode - kurz als STM-Mode bezeichnet - bekannt, bei dem im Gegensatz zum ATM-Mode die von einem Teilnehmer stammende Information kontinuierlich oder in periodisch sich wiederholenden Bitclustern fester Länge übertragen werden. Beim ATM-Mode ist die Aufeinanderfolge der Zellen nicht periodisch.

Der Erfindung liegt nun die Aufgabe zugrunde, eine Vermittlungseinrichtung anzugeben, die für den Transfer von digitalen Signalen sowohl im ATM-Mode als auch im STM-Mode geeignet ist. Erfindungsgemäß wird die Aufgabe durch die Merkmale des Anspruchs 1 gelöst. Vorteilhafte Weiterbildungen der Erfindung gehen aus den Unteransprüchen hervor.

Anhand mehrerer in der Zeichnun dargestellter Ausführungsbeispiele wird nun die Erfindung näher erläutert.
Es zeigen:
- Fig. 1: Eine Vermittlungseinrichtung,
- Fig. 2: eine zentrale Netz-Kontroll-Komponente und ein Koppelfeld einer zweiten Art,
- Fig. 3: ein Koppelfeld einer ersten Art,
- Fig. 4: einen konzentrierenden Koppelfeldblock,
- Fig. 5: das Zeitdiagramm bei der Vermittlung einer Zelle in einem Koppelfeldblock,
- Fig. 6: einen expandierenden Koppelfeldblock,
- Fig. 7: einen Abzweiger erster Art für den Anschluß einer externen Übertragungseinrichtung,
- Fig. 8: einen Abzweiger erster Art für den Anschluß mehrerer externer Übertragungseinrichtungen,
- Fig. 9: einen Abzweiger zweiter Art für den Anschluß einer externen Übertragungseinrichtung und
- Fig. 10: einen Abzweiger zweiter Art für den Anschluß mehrerer externer Übertragungseinrichtungen.

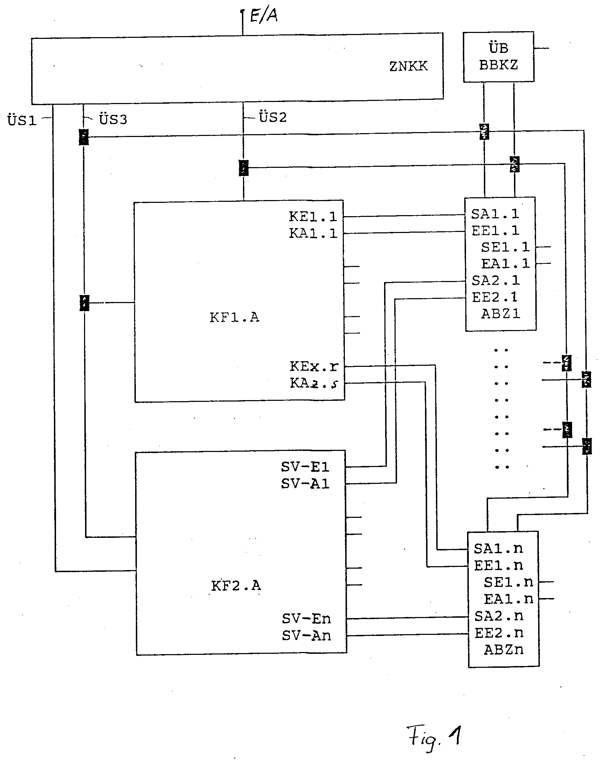

Der Fig. 1 ist die Struktur einer Vermittlungseinrichtung zu entnehmen. Eine zentrale Netz-Kontroll-Komponente ZNKK steht mittels Übertragungssystemen einer ersten, zweiten und dritten Art ÜS1, ÜS2, ÜS3 mit den anderen Komponenten des Vermittlungssystems in Verbindung. Um den unterschiedlichen Anforderungen des digitalen B-ISDN-Netzes hinsichtlich der Vermittlung der verschiedenen Dienste gerecht zu ewrden, sind zwei Koppelfelder, nämlich eines einer ersten Art KF1.A und eines einer zweiten Art KF2.A vorgesehen. Abzweiger ABZ stellen einerseits Verbindungen zu Endeinrichtungen, Konzentratoren, LAN (Local Area Network) und MAN (Monopolitan Area Network) Netzen und Übertragungseinrichtungen und andererseits zu den beiden Koppeifeldern KF1.A, KF2.A und der zentralen Netz-Kontroll-Komponente ZNKK her. Die zentrale Netz-Kontroll-Komponente ZNKK hat ferner Verbindungen E/A zu einer OAM-Zentrale (Operation and Maintenance), die den Betrieb des Nachrichtennetzes überwacht, zu anderen Netzen und insbesondere zu einem Netz für zentrale Zeichengabekanäle. Wie die Fig. 1 zeigt, kann eine Übertragungseinrichtung für Breitband-Konzentratoren BBKZ vorhanden sein.

Die in der Fig 1 bei den Koppelfeldern KF1.A, KF2.A und den Abzweigern ABZ1 ... ABZn angeführten Bezugszeichen haben folgende, in der nachfolgenden Beschreibung näher erläuterte Bedeutungen:
- SA1.1 ... n: Sendezug-Ausgänge 1 der Abzweiger ABZ1 ... ABZn
- SA2.1 ... n: Sendezug-Ausgänge 2 der Abzweiger ABZ1 ... ABZn
- SE1.1 ... n: Sendezug-Eingang der Abzweiger ABZ1 ... ABZn
- EA1.1 ... n: Empfangszug-Ausgänge der Abzweiger ABZ1 ... ABZn
- EE1.1 ... n: Empfangszug-Eingänge 1 der Abzweiger ABZ1 ... ABZn
- EE2.1 ... n: Empfangszug-Eingänge 2 der Abzweiger ABZ1 ... ABZn
- KE1.1 - KEx.r: Eingänge 1 ... r des Koppelfeldblocks KFB1.1 ... KFB1.x
- KA1.1 - KAz.s: Ausgänge 1 ... s des Koppelfeldblocks KFBn.1 ... KFBn.z
- SV-E1 - SV-En: Eingänge der Vermittlungsserver VSV1 ... VSVn
- SV-A1 - SV-An: Ausgänge der Vermittlungsserver VSV1 ... VSVn

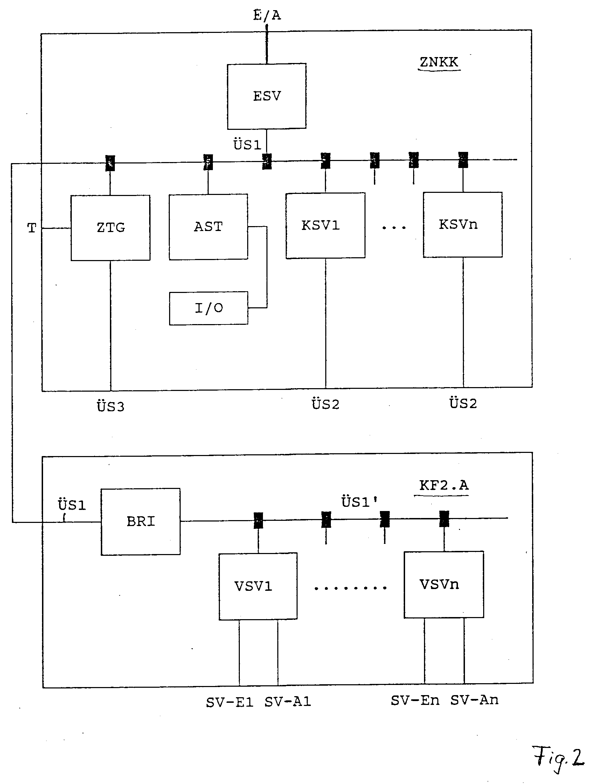

Die Struktur der zentralen Netz-Kontroll-Komponente ZNKK geht aus Fig. 2 hervor. Sie ist in Form eines LAN-Netzes aus einer Arbeitsstation AST mit Ein- und Ausgabeeinrichtungen I/O und Servern KSV1 ... KSVn ESV (Schnittstellen) sowie einem zentralen Taktgenerator ZTG aufgebaut. Diese Einrichtungen sind durch ein Übertragungssystem erster Art ÜS1 - Bus oder Ring-System oder eine Faser-Datenverteil-Schnittstelle FDDI (Fibre Distributed Data Interface) - miteinander verbunden. Die Server unterscheiden sich von den Arbeitsstationen dadurch, daß sie keinen direkten Anschluß von Ein- und Ausgabeeinrichtungen wie Tastatur, Bildschirm, Drucker, Band- oder Platten-Ein/Ausgabe, dafür aber leistungsfähige Schnittstellen zu Übertragungssystemen, insbesondere solchen der zweiten Art ÜS2 besitzen. Bei der zentralen Netz-Kontroll-Komponente in Fig. 2 ist bzgl. der Server unterschieden zwischen Kommunikationsservern KSV1 ... KSVn, welche mit den anderen Komponenten der Vermittlungseinrichtung in Verbindung stehen und Ein-Ausgabeservern ESV, welche die Verbindung zu externen Einrichtungen oder Netzen wie einer OAM-Zentrale, einem Telekommunikations Management Netzwerk oder einem Netz für zentrale Zeichengabe Kanäle herstellen.

Das Übertragungssystem zweiter Art ÜS2 kann dabei technisch gleich dem der ersten Art ÜS1 sein. Aber auch eine Aufteilung auf eine Sende- und eine Empfangsschleife mit Umschaltmöglichkeit auf beidseitig gerichtete Übertragung kann vorteilhaft sein.
Eine aus Arbeitsstationen und Servern bestehenden zentrale Netz-Kontroll-Komponente ZNKK läßt sich modular aufbauen, den Bedürfnissen entsprechend jederzeit erweitern und dem technischen Fortschritt gemäß auch leicht modernisieren. Insbesondere ist auch eine Dopplung aller Funktionen durch Verteilung von jeweils zwei gleichen Anwendersoftware-Paketen auf mindestens zwei Arbeitsstationen oder Server und der Zugriff dieser Geräte auf gedoppelte oder doppelt geführte Übertragungseinrichtungen möglich.

Der zentrale Taktgenerator ZTG kann ebenfalls gedoppelt und mit hochgenauen und hochstabilen Generatoren zur Erzeugung des zentralen Taktes ausgestattet sein. Er kann auch von äußeren, übergeordneten Takt- oder Frequenznormalen geführt werden. Neben der Takterzeugung ist er auch für die Vermaßung eines Vermittlungsrahmens und darin epthaltener Vermittlungszellzeitschlitze sowie deren Nummerierung zuständig. Zur Minderung der Blockade-Wahrscheinlichkeit des Koppelfeldes der ersten Art KF1.A werden in einem Vermittlungsrahmen mehr Vermittlungszeitschlitze untergebracht als im gleichen Zeitraum ATM-Zeilen bei einem Abzweiger ABZ1 ... ABZn ankommen können. Die Informationen des zentralen Taktgenerators ZTG werden durch ein doppelt geführtes Übertragungssystem einer dritten Art ÜS3 an alle Komponenten der Vermittlungseinrichtung verteilt. Dieses Übertragungssystem dritter Art ÜS3 ist in Baumstruktur ausgelegt, wobei darauf geachtet wird, daß die Laufzeiten zu den Empfängern, d.h. zum Koppelfeld-Einsteller und den Abzweigern ABZ1 ... ABZn alle gleich oder nahezu gleich sind. Das Übertragungssystem ÜS1, welches die Arbeitsstation AST und die Server ESV, KSV1 ... KSVn der zentralen Netz-Kontroll-Komponente untereinander verbindet, wird auch zur Übertragung von Steuerungs-Kontroll- und Überwachungsinformationen zum/vom Koppelfeld zweiter Art KF2.A eingesetzt. Die zentrale Netz-Kontroll-Komponente ZNKK hat folgende Funktionen zu erfüllen:
- Abwicklung aller Signalisierungsprozeduren für Verbindungen im connection oriented mode sowie für semipermanente und permanente Verbindungen, soweit erforderlich auch mit einem OAM-Zentrum,
- Verwaltung einer Datei über Zuordnung von Zieladressen zu Adressen von Abzweigern, den Ausbauzustand und die physikalischen Verbindungen zwischen den Komponenten der Vermittlungseinrichtung und sonstiger relevanter Daten,
- Festlegung einzelner oder von Klustern von virtual path identifiers VPI und/oder virtual channel identifiers VCI zu Anschlüssen aller Art auch in Verbindung mit benachbarten Vermittlungseinrichtungen oder einem OAM-Zentrum,
- Wege-Suche, -Festlegung, -Speicherung und -Auflösung für das Koppelfeld der ersten Art KF1.A für Nutz- und auch Testverbindungen,
- Erfassung und Auswertung von Ziel, Dauer bzw. Umfang interner und abgehender Verbindungen und Aufbereitung der Daten zur Gebührenberechnung,
- Auswertung der Eigenüberwachung und aller übergebenen Betriebs- und Störungsmeldungen, deren Anzeige und Weiterleitung an ein OAM-Zentrum und Einleitung von gegebenenfalls nötigen Sperren,
- Verwaltung aller Anwendersoftware für die zentrale Netz-Kontroll-Kompontente ZNKK und Software der anderen Komponenten, Abwicklung von Änderungen und Neuinstallation von Software von den Arbeitsstationen und/oder dem OAM-Zentrum aus,
- Kommunikation mit anderen Netzen,
- Steuerung von zugeordneten Breitband-Konzentratoren,
- Aktivierung/Deaktivierung von Ansagen, Hörtönen, von fest- und Bewegtbildanzeigen auch in Kombination miteinander.

Das Koppelfeld der ersten Art KF1.A ist ein einseitig gerichtetes, mehrstufiges Raumkoppelfeld mit Koppelfeldblöcken, welche Vermittlungszellen in synchronem Zeitvielfachen durchschalten.

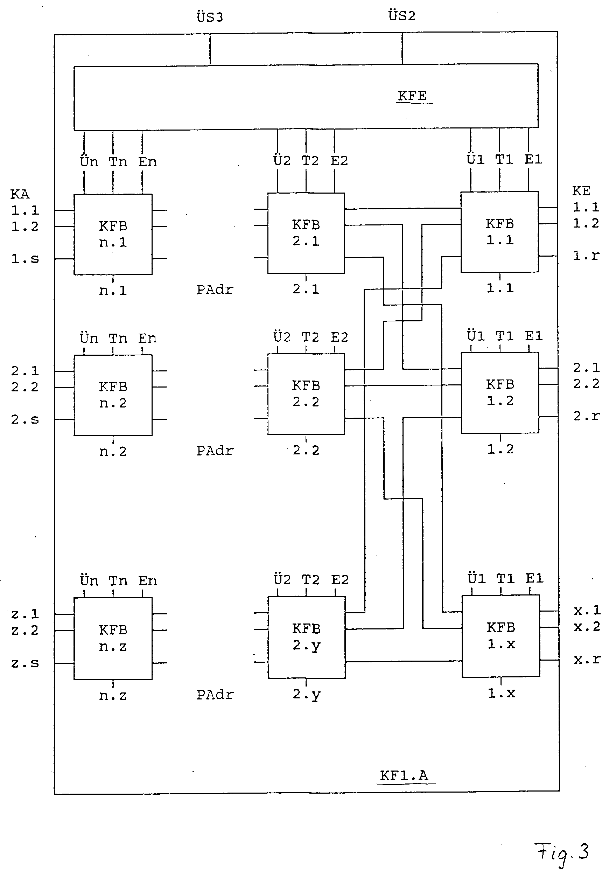

Die Funktionen des Koppelfeldes sind:
- Durchschaltung von virtuellen Kanälen VC (Virtual Channels) für Dienste, die dem connection oriented mode zugeordnet sind,
- Durchschaltung von connection oriented virtual path VP Verbindungen, bei denen die im virtual path VP geführten virtual channels VD in der Vermittlung nicht individuell vermittelt werden müssen,
- Durchschaltung von semipermanenten und permanenten Verbindungen mit vorgegebener Bandbreitenanforderung.
Die Struktur eines Koppelfeldes der ersten Art zeigt Fig. 3. Es besteht aus einem Koppelfeld-Einsteller (KFE), mehreren Koppelstufen (Stufe 1 bis Stufe n), wobei jede Koppelstufe aus mehreren Koppelfeldblöcken KFB1.1 ... KFBn.1, KFB1.2 ... KFBn.2, ... , KFB1.x ... KFBn.z aufgebaut ist.Der Koppelfeld-Einsteller KFE verteilt die von der zentralen Netz-Kontroll-Komponente ZNKK über das Übertragungssystem zweiter Art ÜS2 gelieferten Anweisungen zur Druchschaltung oder Auflösung eines Pfades auf die entsprechenden Koppelfeldblöcke KFB1.1 bis KFBn.z der Stufen 1 bis n des Koppelfeldes über Einstell-Sammelschienen E1 bis En und faßt die Quittungsmeldungen zur Weitergabe an die zentrale Netz-Kontroll-Zentrale ZNKK zusammen. Dies trifft auch auf Fehler- und Störungsmeldungen zu, die über Überwachungssammelschienen Ü1 bis Ün beim Koppelfeld-Einsteller KFB einlaufen. Die von der zentralen Netz-Kontroll-Komponente ZNKK über das übertragungssystem dritter Art ÜS3 gelieferten Taktsignale, die Vermittlungsrahmen VRA- und Vermittlungszellenzeitschlitz VZZ-Nummern und deren Dauer werden über Taktsammelschienen T1 bis Tn an alle Koppelfeldblöcke KFB1.1 bis KFBn.z der Stufen 1 bis n verteilt. Dabei sind die Signale bei der Taktsammelschiene T1 um die Dauer eines Vermittlungszellzeitschlitzes VZZ und die Signale bei den anderen Taktsammelschienen T2 bis Tn jeweils um die Dauer zweier weiterer Vermittlungszellzeitschlitze VZZ gegenüber den Signalen bei der Zuführung des Übertragungssystems dritter Art ÜS3 verzögert.

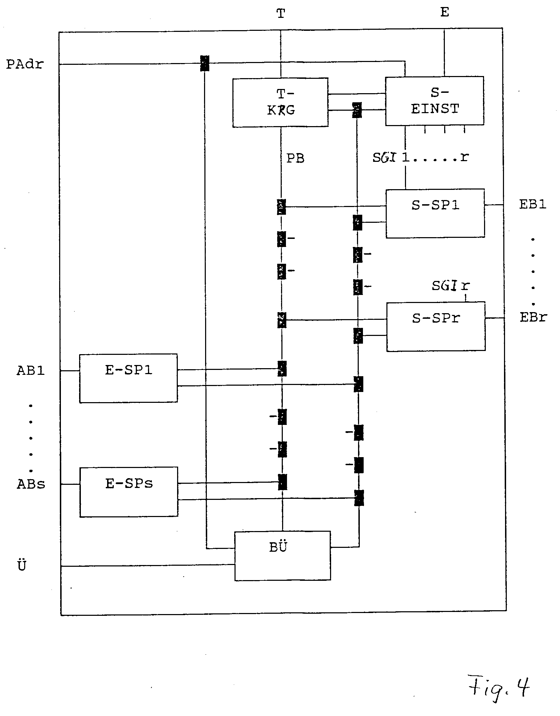

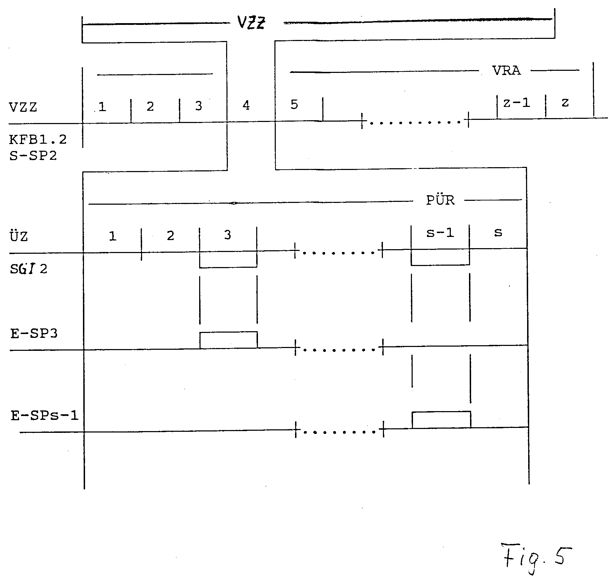

Ein konzentrierender Koppelfeldblock ist in der Fig. 4 dargestellt. Er vermittelt die an seinen Eingängen EB1 bis EBr in jeweils der Dauer eines Vermittlungszellzeitschlitzes VZZ seriell in Sendespeichern S-SP1 bis S-SPr einlaufenden Signale im nächsten Vermittlungszellenzeitschlitz VZZ im Zeitmultiplex über einen Parallel-Bus PB an adressierte Eingangsspeicher E-SP1 bis E-SPs. Von da werden sie im folgenden Vermittlungszellzeitschlitz VZZ seriell über Ausgänge AB1 bis ABs ausgegeben. Für die Zeitmultiplex-Vermittlung über den Parallel-Bus PB wird für jeden Vermittlungszellenzeitschlitz VZZ durch einen Takt- und KFB- Rahmengenerator T-KRG ein Parallel-Bus-Übergaberahmen PÜR mit Übergabeschlitzen ÜZ generiert. Jedem Eingansspeicher E-SP1 ... E-SPr ist ein Übergabezeitschlitz ÜZ gleicher Nummer zugeordnet, zu welchem er die Information einer Vermittlungszelle vom Parallel-Bus PB übernimmt. Die Nummer des Übergabezeitschlitzes ÜZ, zu welchem ein Sendespeicher S-SP1 ... S-SPr zu senden hat, bestimmt ein ihm zugeordneter Sende-Gate-Impuls SGI1 bis SGIr. Bei Verteildiensten kann innerhalb eines Parallel-Bus-Übergaberahmens PÜR ein Sende-Gate-Impuls SGI1 ... SGIr zu mehreren bis allen Übergabezeitschlitzen ÜZ aktiviert werden. Der Zeitverlauf bei der Übermittlung einer Vermittungszelle in einem Koppelfeldblock ist in Fig. 5 dargestellt.

Die Sende-Gate-Impulse SGI1 ... SGIr werden vom Sendespeicher-Einsteller S-EINST generiert, wobei einerseits die über den Anschluß der Einstellsammelschienen E1 ... En vom Koppelfeld-Einsteller KFE übergebene und im Sendespeicher-Einsteller S-EINST bis zum Abbau der Verbindung gespeicherte Anweisung und andererseits die vom Takt- und Koppelfeld-Rahmengenerator T-KRG gelieferten aktuellen Vermittlungsrahmen VRA-, Vermittlungszellzeitschlitze VZZ- und Übergabezeitschlitze ÜZ-Nummern und Zeiten, die Koinzidenzkriterien liefern (wie z.B. für eine Verteilverbindung in Fig. 5 dargestellt). Es ist in Fig. 5 gezeigt, wie z.B. im Vermittlungszellzeitschlitz VZZ Nr. 4 des Vermittlungsrahmens VRA eine Vermittlungszelle im Überabezeitschlitz ÜZ Nr. 3 vom Sendespeicher S-SP2 des Koppelfeldblocks KFB1.2 zum Eingangsspeicher ESP3 und im Übergabezeitschlitz ÜZ Nr. (s-1) (s = Zahl der Übergabezeitschlitze im Parallelbus-Übergaberahmen PÜR mit Dauer eines Vermittlungszellzeitschlitzes VZZ) vom Sendespeicher S-SP2 zum Eingangsspeicher ESPs-1 übermittelt wird. Der Sende-Gate-Impuls SGI2 des Sendespeicher-Einstellers S-EINST ist in den Übergabezeitschlitzen ÜZ Nr. 3 und Nr. (s-1) zu aktivieren.

Eine in Fig. 4 dargestellte Betriebsüberwachungseinrichtung (BÜ) überwacht die Vorgänge am Parallel-Bus PB und faßt die Fehler- und Störungsmeldungen von allen Komponenten des Koppelfeldblocks zusammen.

Die serielle Übertragung der Vermittlungszellen VZ zwischen den Stufen des Koppelfeldes KF1.A sowie von/zu den Abzweigern ABZ1 ... ABZn unter Nutzungvon Synchronbits am Beginn und von Leerbits am Ende jedes Vermittlungszellzeitschlitzes VZZ macht die Verdrahtung und Beherrschung der Laufzeiten auch bei großen Koppelfeldern und zahlreichen Abzweigern bei den hohen Bitraten technisch handhabbar. Andererseits erlaubt die Paralleldarstellung der Information der Vermittlungszellen in den Sendespeichern S-SP und Empfangsspeichern E-SP eine Vermittlung über den Parallel-Bus PB im Zeitvielfach. Damit wird eine kostengünstige Verkabelung in der Vermittlung und die Herstellung der Koppelfeldblöcke KFB1.1 bis KFBn.z in leistungssparender, hochintegrierter Halbleitertechnik möglich.

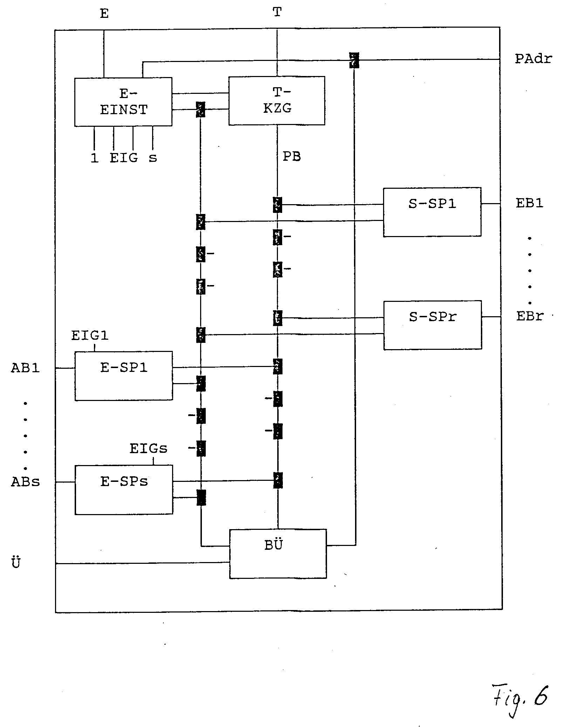

Für bestimmte Anwendungen kann ein expandierender Koppelfeldblock (siehe Fig. 6) vorteilhaft sein. Ein expandierender Koppelfeldblock unterscheidet sich nur in seiner internen Struktur von einem konzentrierenden Koppelfeldblock (Fig. 4) und ist nach außen völlig mit diesem kompatibel. Anstelle des Sendespeicher-Einstellers übernimmt die Vermittlungsfunktion im expandierenden Koppelfeldblock der Empfangsspeicher-Einsteller E-EINST. In einem expandierenden Koppelblock KFB-E ist jedem Sendespeicher S-SP ein Übergabezeitschlitz ÜZ gleicher Nummer zugeordnet, zu welchem er die Information einer Vermittlungszelle an den Parallel-Bus PB übergibt. Zu welchem Übergabezeitschlitz ÜZ ein Empfangsspeicher E-SP die Information einer Vermittlungszelle vom Parallel-Bus PB übernimmt, bestimmt der ihm zugeordnete Empfangs-Gate-Impuls EGI1 bis EGIs. Jeder Empfangs-Gate-Impuls EGI1 ... EGIs kann innerhalb eines Parallel-Bus-Übergaberahmens PÜR nur zu einem Übergabezeitschlitz ÜZ aktiviert werden, jedoch können bei Verteildiensten zu einem Übergabezeitschlitz ÜZ gleichzeitig mehrere Empfangs-Gate-Impulse aktiviert werden.
Für die Anwendung der beiden Typen ergeben sich unter dem Gesichtspunkt möglichst niederer Bitraten auf dem Parallel-Bus PB folgende Kriterien:
- Ist die Anzahl von Sendespeichern und Empfangsspeichern in einem Koppelfeldblock gleich, so ist die Anwendung der beiden Versionen gleichgewichtig.
- Sind mehr Sendespeicher als Empfangsspeicher nötig, um eine bestimmte Koppelfeldkonfiguration zu erreichen (Verkehrskonzentration), so ist ein konzentrierender Koppelfeldblock besser geeignet.
- Sind mehr Empfangsspeicher als Sendespeicher nötig, um eine andere Koppelfeldkonfiguration zu erreichen (Verkehrsexpansion, unidirektionale Verteildienste), so ist ein expandierender Koppelfeldblock besser geeignet.
So können z. B. in einem gemischt mit konzentrierenden und expandierenden Koppelfeldblöcken bestückten Koppelfeld der ersten Art KF1.A in der ersten Stufe die von einer Endeinrichtung abgehenden Signale einem Eingang eines konzentrierenden Koppelfeldblocks zugeführt und die bei ihr ankommenden Signale von einem Ausgang eines expandierenden Koppelfeldblocks der letzten Stufe abgenommen werden.

Das Koppelfeld der zweiten Art basiert auf dem Prinzip einer Speichervermittlung mit einseitig gerichteten Zeit-Raum-Zeit-Stufen.
Seine Funktionen sind:
- Durchschaltung von virtual channels VC für Dienste , die im connectionless mode übertragen werden.
- Durchschaltung von virtual channels VC für Dienste des connection oriented mode nach Vorgabe der zentralen Netz-Kontroll-Komponente ZNKK imsbesondere für "Message Mode Service" d.h.Durchschaltung einzelner oder weniger Zellen in Folge.

Fig.2 zeigt die Struktur des Koppelfeldes zweiter Art KF2.A. Das Koppelfeld ist in Form eines LAN aus Vermittlungsservern (VSV) aufgebaut, welche untereinander durch ein Ubertragungssystem erster Art ÜS1' verbunden sind.Die Verbindung zum ÜS1 erster Art der zentralen Netz-Kontroll-Komponente ZNKK wird über Server, die als Brücken BRI fungieren, hergestellt. Neben der Steuerung des Informationstransfers von und zur zentralen Netz-Kontroll-Komponente ZNKK übernehmen sie auch Speicher-und Verarbeitungsfunktionen und sie entkoppeln vor allem die Datenflüsse auf den beiden Übertragungssystemen ÜS1 und ÜS1'. Jeder Vermittlungsserver VSV1 ... VSVn ist mit Schnittstellenschaltungen zu den zweiten Aus-und Eingängen SA2, EE2 der Abzweiger versehen. Der Informationstransfer von/zu den Abzweigern wird entweder über einzelne Direktverbindungen, vorzugsweise jedoch über ein Übertragungssystem einer zweiten Art ÜS2' abgewickelt, wobei eine Aufteilung der Abzweiger auf mehrere Übertragungssysteme der zweiten Art ÜS2' vorgesehen werden kann. Eine Ein/Ausgabesteuerung in jedem Vermittlungsserver VSV1 ... VSVn speichert Zellen im connectionless und solche im connection oriented mode in getrennten Eingangsspeicherbereichen ein und entnimmt sie aus getrennten Ausgangsspeicherbereichen. Die Übergabe von Zellen an einen Abzweiger ABZ1 ... ABZn erfolgt erst nach dessen Meldung der Übernahmebereitschaft. Aus den beiden Eingangsspeicherbereichen werden die Zellen von zwei Einrichtungen entnommen, welche Protokoll-und Vermittlungsfunktionen getrennt nach Zelltyp vornehmen. Sie werden nach erfolgreicher Bearbeitung in getrennten Ausgangsspeicherbereichen mit der Adresse des Abzweigers ABZ1 ... ABZn, an den sie übergeben werden sollen, bei einem Vermittlungsserver VSV1 ... VSVn, der diesen Abzweiger erreicht, abgelegt. Die für einen connection oriented Vermittlungsprozeß nötigen Informationen werden von der zentralen Netz-Kontroll-Komponente ZNKK angefordert oder von dort übergeben. Dies gilt auch für Zellen, die zu Testverbindungen gehören.

Für Zellen im connection oriented mode sind dies alter zu neuem virtual path identifier VPI und virtual channel VCI einschließlich Abzweiger-Adresse, die von der zentralen Netz-Kontroll-Komponente ZNKK gemäß Signalisierungsprozedur angewiesen werden.

Für Zellen im connectionless mode werden Zuordnungen alter zu neuem Multiplex Identifikations Wert MID, gegebenenfalls alter zu neuem virtual path identifier VPI und Zieladresse zu Abzweiger-Adresse oder Cluster von Abzweiger-Adressen, soweit diese Zuordnungen nicht in einer Dateikopie im Koppelfeld der zweiten Art KF2.A vorgehalten werden, übergeben. Die Ziel- und Absenderadressen selbst werden speziellen Zellen entnommen (z.B. aus Zellen, die einen Code BOM - Beging of Message - oder SSM - Single Segment Message - enthalten). Diese Zellen enthalten erstmals den dem Cluster zugeordneten MID-Wert, der abgehend gegebenenfalls durch den von der zentralen Netz-Kontroll-Komponenten ZNKK angewiesenen MID-Wert bei allen Zellen des Clusters zu ersetzen ist.

Bei Verteildiensten sind die entsprechenden Mehrfach-Adressen zu übergeben. Bei internen und abgehenden Verbindungen wird neben der Absender-Adresse auch von Zeit zu Zeit die Anzahl der zur Zieladresse vermittelten Zellen zwecks Gebührenverrechnung an die zentrale Netz-Kontroll-Komponente ZNKK übergeben. Der Vermittlung von Zellen im connection oriented mode wird im allgemeinen der Vorrang vor Zellen im connectionless mode eingeräumt. Alle übergeordneten Funktionen, wie Abwicklung der Signalisierungsprozeduren für Zellen im connection oriented mode, Gebührenberechnung, Verbindung zu einer OAM-Zentrale und anderen Netzen, werden von der zentralen Netz-Kontroll-Komponente ZNKK oder über diese abgewickelt. Die Verwendung marktgängiger und leistungsfähiger Server läßt den modularen Aufbau, die Erweiterung und Anpassung an technische Erfordernisse und Fortschritte in einfacher Weise zu. Der Einsatz standardisierter Betriebssysteme, insbesondere die Verwendung des gleichen wie in der zentrale Netz-Kontroll-Komponente ZNKK und genormter Übertragungssysteme erleichtern Betrieb, Wartung und gegebenenfalls Änderungen.

Obwohl für das B-ISDN vom CCITT der Asynchronous Transfer Mode ATM verbindlich empfohlen wird, ist insbesondere für semipermanente und permanente Verbindungen zumindest für eine Übergangszeit des Breitbandnetzes mit Anforderungen zur Durchschaltung von Signalen im Synchronous Transfer Mode STM zu rechnen. Deshalb soll die Möglichkeit bestehen, die Vermittlung mit
- Abzweigern einer ersten Art, für Signale im Asynchronous Transfer Mode, mit
- Abzweigern einer zweiten Art, für Signale im Synchronous Transfer Mode und mit
- Abzweigern für spezielle Anwendungen auszustatten.

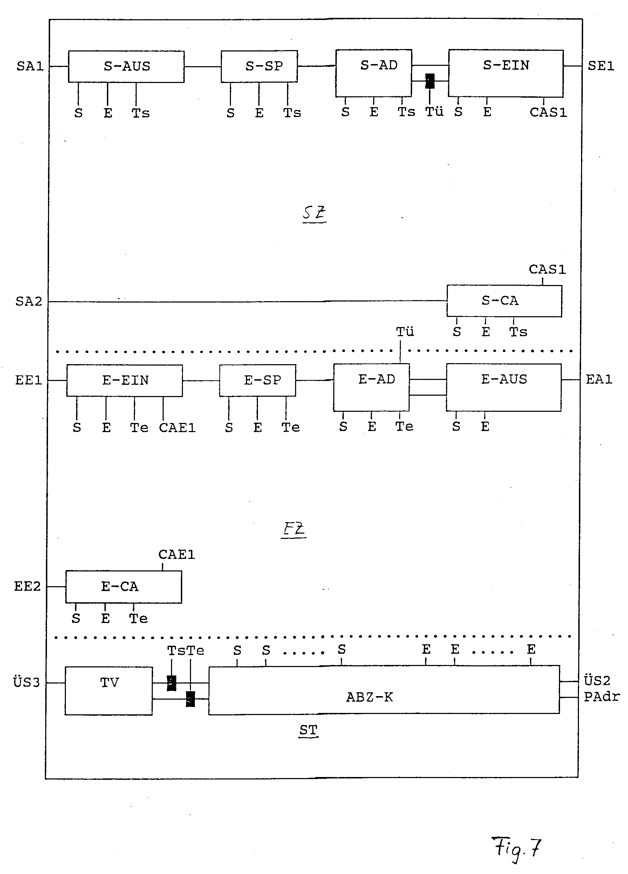

Die hauptsächlichen Funktionen eines Abzweigers der ersten Art sind:
- Verteilung der ankommenden Zellen gemäß den Diensteklassen bzw. den Anweisungen der zentralen Netz-Kontroll-Komponente ZNKK auf die beiden Koppelfelder und Abzweig von Zellen mit Signalisierungs-und OAM-Information zur zentralen Netz-Kontroll-Komponente ZNKK sowie Zusammenfassung von Zellen dieser Arten in abgehender Richtung.
- Zeitliche Anpassung der z. T.asynchron ankommenden Zellen, welche über das Koppelfeld erster Art KF1.A vermittelt werden, an dessen synchrones Vermittlungsverhalten.
- Senden, Empfangen und Auswerten von Zellen für den Test von Verbindungswegen.
Ein Abzweiger besitzt hierzu, wie Fig. 7 zeigt, einen Sendezug SZ, einen Empfangszug EZ und eine Steuerung ST, mit Taktverteiler TV und Abzweiger-Kontrolle ABZ-K.

Im Sendezug SZ laufen folgende Funktionen ab:
Die am Eingang SE1 seriell und in ATM-Zellen strukturierte Information wird in der Sendezug-Eingangsschaltung S-EIN vom Leitungscode oder optischen Signalen in den Binärcode gewandelt. Sie wird über einen Descrambler geführt und auf den Zell-Header synchronisiert. Zur Weiterverarbeitung mit niederer Taktrate wird der Zellinhalt octet oder mehrfach octet-weise parallel strukturiert. Dann werden die Zellen gemäß Header-Inhalt zur Vermittlung über das Koppelfeld der ersten Art KF1.A einem Sendezug-Daten-Adapter S-AD, Zellen zur Vermittlung über das Koppelfeld zweiter Art KF2.A an einen Sendezug-Cache-Zwischenspeicher S-CA und Zellen aus Signalisierungs-und OAM-Kanälen an den Abzweiger-Kontroller ABZ-K übergeben. Hierzu erhält die Sendezug-Eingangsschaltung S-EIN von der zentralen Netz-Kontroll-Komponente ZNKK über die Abzweiger-Kontrolle ABZ-K die Zuordnungen der aktuellen Header-Inhalte zu diesen Richtungen.

Zellen, die zur Vermittlung über das Koppelfeld der ersten Art KF1.A an den Sendezug-Datenadapter S-AD übergeben wurden, ordnet dieser Anfangsadressen von Speicherbereichen des Sendezug-Speichers S-SP zu, die groß genug sind, jeweils eine Zelle aufzunehmen. Hierzu erhält der Sendezug-Datenadapter S-AD die Zuordnungen Header-Inhalt zu Speicherbereichsadressen von der zentralen Netz-Kontroll-Komponente ZNKK über die Abzweiger-Kontrolle ABZ-K. Für Testverbindungen über das Koppelfeld der ersten Art KF1.A werden von der Abzweiger-Kontrolle ABZ-K Testzellen mit Angabe der Speicherbereichsadresse übergeben. Der Sendezug-Speicher S-SP ist mindestens mit soviel Adressen adressierbar, wie ein Vermittlungsrahmen VRA Vermittlungszellzeitschlitze VZZ enthält. Der Adresszyklus kann sich aber auch über mehrere ganze Vermittlungsrahmen VRA erstrecken. Er wird in der Vermittungszellzeitschlitz- VZZ-und Vermittlungsrahmen VRA-Adressfolge ausgelesen. Damit jede Zelle die kürzest mögliche Zeit im Sendezug-Speicher S-SP verbleibt, ordnet der Sendezug-Adapter S-AD einer zur Einspeicherung anstehenden Zelle aus dem angewiesenen Adresscluster diejenige Speicherbereichsadresse zu, die der vom Taktverteiler TV ständig bereitgestellten, aktuellen Vermittlungszellzeitschlitz-Nummer am nächsten kommt, jedoch mindestens eine Vermittlungszeitschlitz- VZZ-Zeit voraus liegt. Durch den Speicherzyklus wird zeitgerecht diejenige Speicherbereichsadresse, welche der gerade im Ausleseprozess befindlichen folgt, für Einschreibvorgänge gesperrt. Jeder Einschreibvorgang kennzeichnet die Adresse unter der eingespeichert wurde als bereits belegt. Jeder Auslesevorgang löscht die Sperre und das Belegungskriterium, sobald die Zelle ausgelesen ist. Liegt zum Einschreib-Zeitpunkt für eine zulässige Speicherbereichsadresse keine Zelle vor, so bleibt der Speicherplatz leer. Bei Takttoleranzen zwischen externem und internem Takt ist der Sendezug-Datenadapter S-AD auch für die Vorgänge zur Taktangleichung zuständig. Dies kann in einem Fall einen leeren Speicherplatz bedeuten, im anderen Fall entweder das Verwerfen einer Zeile oder die Anforderung für den Aufbau einer Verbindung für eine zusätzliche Zelle und deren zyklusgerechte Übertragung. Die aus dem Sendezug-Speicher S-SP im Zyklus der Vermittlungszellezeitschlitz-Nummern ausgelesenen Zellen werden bei der Sendezug-Ausgangsschaltung S-AUS mit einem vorangestellten Synchronwort und am Zellende mit einigen Leerbits versehen und bilden damit eine Vermittlungszelle. Nach parallel/seriell-Wandlung und Umsetzung in einen Übertragungscode, werden sie synchron mit dem Vermittlungszellzeitschlitz VZZ am Ausgang SA1 des Abzweigers gesendet. Die Leerbits am Vermittlungszellende dienen dem Ausgleich unterschiedlicher Laufzeiten bei verschieden langen Verbindungswegen zwischen Abzweigern und den Koppelfeldeingängen sowie zwischen Koppelfeldblöcken der Koppelstufen.
Zu vermittelnde Zellen über das Koppelfeld der zweiten Art KF2.A werden über die Verbindung CAS1 an den Sendezug-Cache-Zwischenspeicher S-CA übergeben und dort nur solange zwischengespeichert, bis eine Übertragung über das an den Sendezugausgang SA2 angeschlossene Übertragungssystem möglich ist. Füllzustandsmeldungen über den Empfangszug-Cache-Zwischenspeicher E-CA, die von der Abzweiger-Kontrolle ABZ-K oder direkt an den Sende-Cache-Zwischenspeicher S-CA übergeben werden, werden mit Vorrang an das Koppelfeld zweiter Art KF2.A vom S-CA übertragen, ebenso wie Zellen von Testverbindungen. Zellen, die an die zentrale Netz-Kontroll-Komponente ZNKK geleitet werden müssen, werden von der Sendezug-Eingangsschaltung S-EIN direkt an die Abzweiger-Kkontrolle ABZ-K übergeben.

Im Empfangszug EZ laufen folgende Funktionen ab:.
Vermittelte Zellen vom Koppelfeld der ersten Art KF1.A treffen am Eingang EE1 des Empfangszuges ein und werden an die Empfangszug-Eingangsschaltung E-EIN geleitet. Nach Codewandlung und Aufsynchronisieren auf das Synchronwort wird dieses auf Fehler untersucht und diese ausgewertet. Das Synchronwort und übergebene Leerbits am Vermittlungszellende werden entfernt. Die verbleibende ATM-Zelle wird octet-oder mehrfach octet-weise parallel strukturiert und mit dem Headerinhalt für den nächsten Übertragungsabschnitt versehen. Das kann u.U. bedeuten, daß er auch unverändert bleibt. Sodann stehen die Zellen zur Einspeicherung beim Empfangszug-Speicher E-SP an. Er hat einen Adresszyklus von der Dauer eines Vermittlungsrahmens VRA, jedoch im Gegensatz zum Sendezug-Speicher S-SP innerhalb eines Vermittlungsrahmens VRA nur soviele Zellen adressierbar, wie am Empfangszug-Ausgang EA1 maximal während einer Vermittlungsrahmendauer abgegeben werden können. Der Beginn des Speicheradresszyklus wird mit dem Beginn eines Vermittlungsrahmens VRA synchronisiert. Dadurch ist eine feste Zuordnung Vermittlungszellzeitschlitznummer zu Speicherbereichsadresse möglich.
Die Empfangszug-Eingangschaltung E-EIN erhält von der zentralen Netz-Kontroll-Komponente ZNKK über ABZ-K die Zuordnungen des alten Headerinhalts zum neuen sowie des alten Headerinhalts zu Vermittlungszellzeitschlitznummern und zu zulässigen Speicherbereichsadressen. Damit jede Zelle die kürzest mögliche Zeit im Empfangszug-Speicher E-SP verbleibt, benutzt die Empfangszug-Eingangsschaltung E-EIN bei Zellen, die über das Koppelfeld erster Art KF1.A vermittelt wurden, die feste Zuordnung.
Vermittelte Zellen vom Koppelfeld der zweiten Art KF2.A treffen am Eingang EE2 des Empfangszuges ein und werden im Empfangszug-Cache-Zwischenspeicher E-CA in zwei unterschiedlichen Speicherbereichen abgelegt, getrennt nach Zellen, welche dem connectionless und solchen, welche dem connection oriented mode angehören. Vorausgesetzt ist, daß dem Koppelfeld der zweiten Art KF2.A freier Speicherplatz im Empfangszug-Cache-Zwischenspeicher E-CA signalisiert wurde. Aus dem Empfangszug-Cache-Zwischenspeicher E-CA werden die Zellen zur Einspeicherung im Empfangszug-Speicher E-SP über die Verbindung CAE1 abgerufen, wobei Zellen des connection oriented mode mit Vorrang behandelt werden.
Zur Einspeicherung im Empfangszugspeicher E-SP erhält die Empfangszugeingangsschaltung E-EIN für Zellen im connection oriented mode von der zentralen Netz-Kontroll-Komponente ZNKK über die Abzweiger-Kontrolle ABZ-K die Zuordnung des Headerinhalts zur Speicherbereichsadresse oder zu Clustern von Adressen. Eine Zelle wird unter der Adresse eingespeichert, welche der aktuell anstehenden am nächsten kommt, jedoch mindestens um eine Adressnummer voraus liegt Für Zellen im connectionless mode erhält die Empfangszug-Eingangsschaltung E-EIN von der Abzweiger-Kontrolle ABZ-K freie Speicherbereichsadressen angegeben, in welche die Empfangszug-Eingangsschaltung E-EIN diese Zellen einspeichert. Eine Zelle eines Signalisierungs-und OAM-Kanales erhält die Empfangszug-Eingangsschaltung E-EIN der Abzweiger-Kontrolle ABZ-K bereits mit der Angabe der Speicherbereichsadresse, unter der sie eingespeichert werden muß. Die vom Empfangszug-Speicher E-SP ausgelesenen Zellen werden an den Empfangszug-Daten-Adapter E-AD und von da an die Empfangszug-Ausgangsschaltung (E-AUS) übergeben. Ausgenommen hiervon sind Testzellen, welche an die Abzweiger-Kontrolle ABZ-K weitergeleitet werden.

Wenn als Sendetakt bei der Empfangszug-Ausgangsschaltung E-AUS nicht ein aus dem internen Takt durch feste Taktteilung gewonnener Takt benutzt wird, sondern der von der Sendezug-Eingangsschaltung S-EIN generierte Empfangstakt, so hat der Empfangszug-Datenadapter E-AD die Vorgänge zur Taktangleichung vorzunehmen. Er erhält hierzu von der Sendezug-Eingangsschaltung S-EIN über einen Anschluß Tü den aus dem empfangenen Bitstrom abgeleiteten Bittakt übermittelt. Die Taktangleichung kann in einem Fall bedeuten, eine Leerzelle zu senden oder im anderen Fall, eine Zelle zu verwerfen. Auch die Einordnung einer von einem Sendezug-Datenadapter S-AD zusätzlich gesendeten Zelle, in die Folge zu sendender Zellen, fällt hierunter. Die Empfangszug-Ausgangsschaltung E-AUS übernimmt die Zellen und den Takt von dem Empfangszug-Datenadapter E-AD, führt die parallel/seriell-Wandlung durch, verscrambelt die Binärinformation und setzt sie in den Leitungscode bzw.in optische Signale um.

Der Taktverteiler TV in der Steuerung ST erhält den internen Takt, die Vermittlungsrahmen- VRA und die Vermittlungszellzeitschlitz- VZZ Dauer und Nummerierung über das Übertragungssystem ÜS3. Er erzeugt daraus alle im Abzweiger benötigten Takte Ts, Te und Vermaßungen. Dabei bleiben die Vermittlungsrahmen VRA und die Vermittlungszellzeitschlitze VZZ für den Sendezug SZ gegenüber den Signalen bei ÜS3 unverzögert, während sie für den Empfangszug EZ um die doppelte Anzahl von Vermittlungszellzeitschlitz-Zeiten verzögert sind, wie im Koppelfeld erster Art KF1.A Koppelstufen vorhanden sind. Der Taktverteiler TV generiert auch die Taktraten, wie sie für den Empfangszugspeicher E-SP, für den Empfangszugdatenadapter E-AD sowie der Empfangszug-Ausgangsschaltung E-AUS benötigt werden, falls ein Sende-Leitungstakt benutzt wird, der vom internen Takt durch feste Taktteilung hergeleitet wird.

Die Abzweiger-Kontrolle ABZ-K kommuniziert in erster Linie mit dem Sendezug SZ und dem Empfangszug EZ auf der einen und mit der zentralen Netz-Kontroll-Komponente ZNKK auf der anderen Seite. Die Kommunikation zwischen der Abzweiger-Kontrolle ABZ-K und den Sende- und Empfangszug-Komponenten wird über Verbindungen zwischen dem jeweiligen Ausgang S (S = Sender) der Abzweiger-Kontrolle ABZ-K und dem jeweiligen Eingang E (Empfänger) der Komponente und vice versa abgewickelt. Ferner werden den Komponenten des Sendezuges die jeweils benötigten Takte Ts und den Komponenten des Empfangszuges die Takte Te zugeführt. Alle Takte Ts und Te werden vom Taktverteiler TV in allen benötigten Taktfrequenz- und Zeitlagen erzeugt. Darf die Empfangszug-Ausgangsschaltung E-AUS nicht den Takt Te benutzen, sondern muß sie den gleichen Bittakt, wie er aus dem ankommenden Signal bei der Sendezug-Eingangsschaltung S-EIN abgeleitet wurde, verwenden, so wird dieser Bittakt von der Sendezug-Eingangsschaltung über dessen Ausgang Tü an den Eingang Tü des Empfangszug-Datenadapters E-AD übergeben (Tü1 ... Tüm, wenn mehrere Sendezug-Eingangsschaltungen S-EIN vorhanden sind). Über Verbindungen zwischen mit CAS1 und CASm bezeichneten Anschlüssen werden die an das Koppelfeld zweiter Art KFZ.A weiterzuleitenden ATM-Zellen zunächst an den Sendezug-Cache-Zwischenspeicher S-CA übergeben und über Verbindungen zwischen mit CAE1 bezeichneten Anschlüssen vom Empfangs-Cache-Zwischenspeicher übernommen.

Die Abzweiger-Kontrolle übernimmt vom Sendezug SZ:
- Die Zellen für Signalisierungs-und OAM-Kanäle,
- Störungs-und Fehlermeldungen der Komponenten des Sendezugs SZ,
- Angaben über verworfene Zellen,
- Anforderungen auf für Ausgleichsvorgänge zu vermittelnde Zellen.

Die Abzweiger-Kontrolle ABZ-K übergibt an den Sendezug SZ:
- Zuordnungen der Headerinhalte für zu benutzende Koppelfelder,
- Für Zellen, die über das Koppelfeld erster Art KF1.A vermittelt werden, die Zuordnung des Headerinhalts zu den zulässigen Speicherbereichsadressen des Sendezug-Speichers S-SP,
- Anweisungen zur vorbereitenden oder dauernden Sperre des Sendezugs SZ,
- Füllzustandsmeldungen des Empfangszug-Cache-Zwischenspeichers E-CA an das Koppelfeld zweiter Art KF2.A.
- Zellen zum Test von Verbindungswegen für das Koppelfeld erster Art KFl.A an den Sendezug-Datenadapter S-AD, für das Koppelfeld zweiter Art KF2.A an den Sendezug-Cache-Zwischenspeicher S-CA.

Die Abzweiger-Kontrolle ABZ-K übernimmt vom Empfangszug EZ:
- Füllzustandsmeldungen vom Empfangszug-Cache-Zwischenspeicher E-CA,
- Störungs-und Fehlermeldungen der Komponenten des Empfangszugs EZ,
- Angaben über verworfene Zellen,
- Zellen zum Test von Verbindungswegen vom Empfangszug-Datenadapter E-AD.

Die Abzweiger-Kontrolle ABZ-K übergibt an den Empfangszug EZ:
- Abgehende Zellen für Signalisierungs-und OAM-Kanäle einschließlich deren Speicherbereichsadressen,
- Zuordnungen für Zellheader von über das Koppelfeld erster Art KFl.A vermittelten Zellen zu neuem Header sowie deren Vermittlungszellzeitschlitznummern zu Speicherbereichsadressen,
- Zuordnungen von Zellheadern von Zellen im connection oriented mode, die über das Koppelfeld zweiter Art KF2.A vermittelt wurden, zu Speicherbereichsadressen,
- Zuordnung freier Speicherbereichsadressen zu Zellen im connectionless mode, die über das Koppelfeld zweiter Art KF2.A vermittelt wurden,
- Anweisungen zur vorbereitenden oder dauernden Sperre des Empfangszugs EZ.

Die Abzweiger-Kontolle ABZ-K übernimmt von der zentralen Netz-Kontroll-Komponente ZNKK über das Übertragungssystem ÜS2 an den Abzweiger adressierte Information:
- Alle o.g. an den Sendezug SZ und den Empfangszug EZ weiterzureichenden Informationen, wie für Verbindungsaufbau beschrieben. Bei Verbindungsabbau werden die gleichen in der Abzweige-Kontrolle ABZ-K gespeicherten Daten verwendet, wenn sich die Anweisungen nur auf die Verbindungsnummer beziehen,
- Software und Softwareänderungen sowie sonstige für den Betrieb des Abzweigers relevante Anweisungen

Die Abzweiger-Kontrolle ABZ-K übergibt an die zentrale Netz-Kontroll-Komponente ZNKK über das Übertragungssystem ÜS2 unter Voranstellung der Abzweiger-Adresse, die aus der Platzadresse PAdr abgeleitet wird:
- Alle o.g.vom Sendezug SZ und vom Empfangszug EZ übernommenen und an die zentrale Netz-Kontroll-Komponente ZNKK weiterzureichenden Informationen,
- Quittungen auf Einstell- und Auslöseanweisungen,
- Quittungen zu Softwareübernahmen und deren ordnungsgemäße Implementierung sowie auf sonstige für den Betrieb des Abzweigers relevanten Anweisungen,
- Ergebnisse der Auswertung von Testverbindungen

Die Abzweiger-Kontrolle ABZ-K übernimmt vom Taktverteiler TV:
- Die aktuellen Vermittlungsrahmen- und Vermittlungszellzeitschlitz-Nummern des Sendezugs SZ und des Empfangszugs EZ sowie die aktuellen Speicherbereichsadressen des Empfangszug-Speichers E-SP.

Die Abzweiger-Kontrolle ABZ-K steuert alle Übernahme-und Übergabevorgänge, insbesondere auch das Übertragungsprotokoll für die Kommunikation mit der zentralen Netz-Kontroll-Komponente ZNKK über das Übertragungssystem ÜS2, führt die Eigenüberwachung und die des Taktverteilers TV durch.

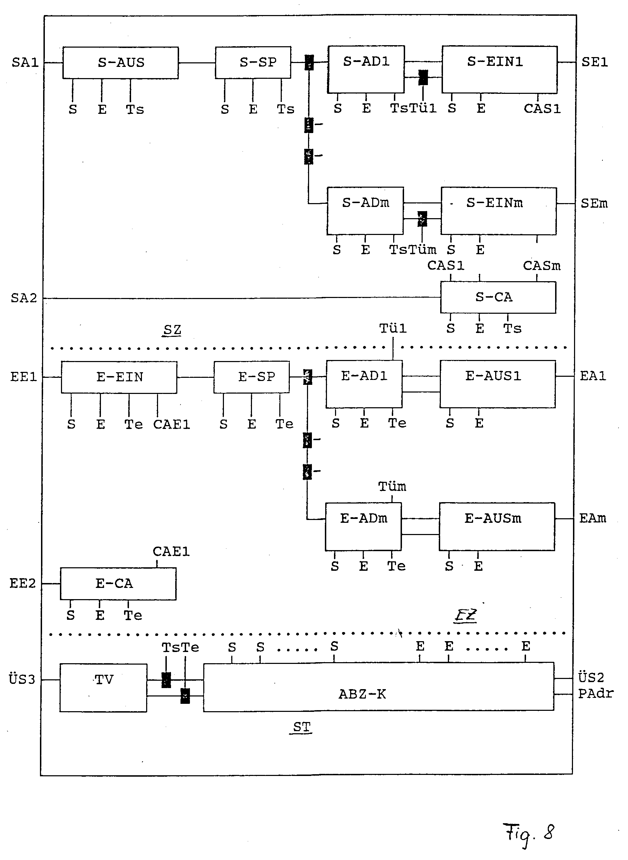

Einen Abzweiger erster Art, für den Anschluß mehrerer Übertragungseinrichtungen zeigt die Fig. 8. Die hauptsächlichen Funktionen dieses Abzweigertyps sind die gleichen wie bei dem in Fig. 7 dargestellten Abzweiger. Dieser Abzweigertyp ist von Vorteil, wenn durch Multiplexeinrichtungen, die der Vermittlung vor/nachgeschaltet sind, Bitraten angeboten werden, die Hierarchiestufen digitaler Übertragungssysteme entsprechen, die niederer als die für einen Abzweiger maximal zulässige liegen. Voraussetzung ist jedoch, daß die Summe der Bitraten auf den angeschlossenen Übertragungseinrichtungen die für einen Abzweiger maximal zulässige nicht übersteigt.
Ein derartiger Abzweiger ist mit einem Sendezug SZ, der mehrere Sendezug-Eingangsschaltungen S-EIN1 bis S-EINm und mehrere Sendezug-Datenadapter S-AD1 bis S-ADm besitzt und mit einem Empfangszug EZ ausgestattet, der mehrere Empfangszug-Datentadapter E-AD1 bis E-ADm sowie mehrere Empfangszug-Ausgangsschaltungen E-AUS1 bis E-AUSm aufweist. Im Abzweiger stellt der Zugriff der Sendezug-Adapter S-AD1 bis S-ADm auf den gemeinsamen Sendezugspeicher S-SP die interne Multiplexfunktion her und die Verteilung der Zellen vom Empfangszug-Speicher E-SP auf die Empfangszug-Datenadapter E-AD1 bis E-ADm die Demultiplexfunktion. Alle Sendezug-Eingangsschaltungen S-EIN1 bis S-EINm haben über die Verbindungen CAS1 ... CASm Zugriff auf den gemeinsamen Sendezug-Cache-Zwischenspeicher S-CA. Von der Abzweiger-Kontrolle ABZ-K werden den Sendezug-Datenadaptern S-AD1 bis S-ADm und in diesem Fall auch den Empfangsdatenadaptern E-AD1 bis E-ADm nichtüberlappende Speicherbereichsadressen für den Sendezug-Speicher S-SP und den Empfangszugspeicher E-SP zugewiesen. Die Abzweiger-Kontrolle ABZ-K steht mit allen Sendezug-Eingangsschaltungen S-EIN1 bis S-EINm und Empfangszug-Ausgangsschaltungen E-AUS1 bis E-AUSm für die Übernahme/Übergabe von Signalisierungs-und OAM-Kanälen und mit allen Sendezug-Datenadaptern S-AD1 bis S-ADm und allen Empfangszug-Datenadaptern E-AD1 bis E-ADm für Testzellen in Verbindung. Der Taktverteiler generiert auch die für die einzelnen angeschlossenen abgehenden Übertragungseinrichtungen niederen Taktfrequenzen und bietet sie den entsprechenden Empfangszug-Datenadaptern E-AD1 bis E-ADm an. Sie werden benutzt, wenn der entsprechende Bittakt nicht von der zugehörigen Sendezug-Eingangsschaltung S-EIN1 bis S-EINm über die Anschlüsse Tü1 bis Tüm übernommen wird.
Die Fuktionen der Abzweiger-Kontrolle ABZ-K sind insofern erweitert, als sie mehrere Sendezug-Eingangsschaltungen S-EIN1 bis S-EINm, Sendezug-Datenadapter S-AD1 bis S-ADm, Empfangszug-Datenadapter E-AD1 bis E-ADm und Empfangszug-Ausgangsschaltungen E-AUS1 bis E-AUSm zu bedienen hat und den Empfangszug-Datenadaptern E-AD1 bis E-ADm die Speicherbereichsadressen des Empfangszug-Speichers E-SP zuweisen muß, deren Inhalte sie übernehmen müssen.

Für manche Anwendungen können Abzweiger vorteilhaft sein, welche für den Anschluß nur ankommender oder nur abgehender Übertragungseinrichtungen ausgelegt sind, beispielsweise für Video Verteildienste.
Dann reicht es aus, wenn ein Abzweigertyp mit nur einem Sendezug SZ und einer Steuerung ST und ein anderer mit nur einem Empfangszug EZ und einer Steuerung ST ausgerüstet ist. Sende- und Empfangszug SZ, EZ können dabei auch mit mehr als einem Eingang oder mehr als einem Ausgang versehen sein, wenn die Summe der Bitraten der einzelnen angeschlossenen Übertragungseinrichtungen die maximal für einen Abzweiger zulässige nicht überschreitet.

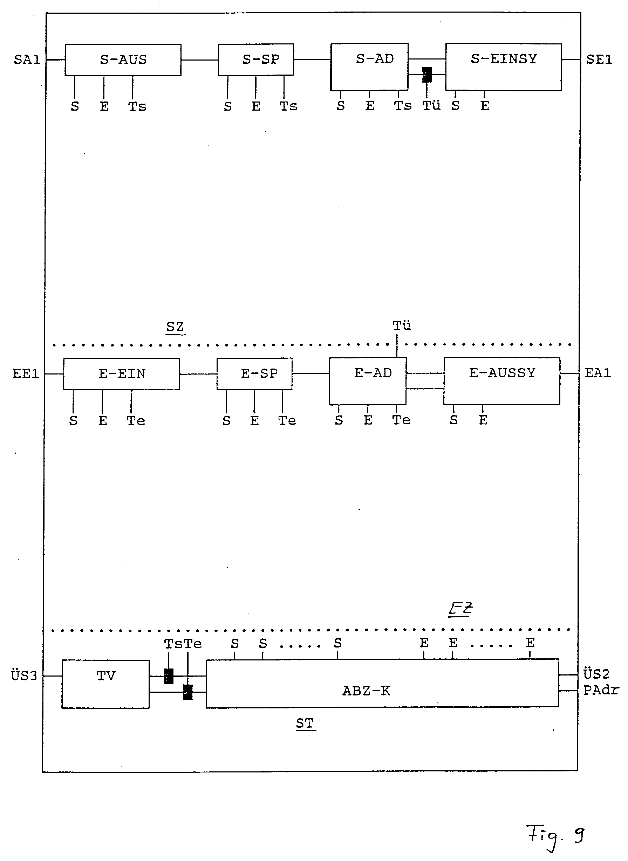

Ein Abzweiger zweiter Art für den Anschluß einer Übertragungseinrichtung mit maximal zulässiger Bitrate ist in Fig. 9 dargestellt.

Die hauptsächlichen Funktionen eines Abzweiger dieser zweiten Art sind:
- Paketierung des ankommenden, kontinuierlichen Bitstromes in Zellen des ATM-Modes und Umsetzen des Nutzinhaltes der vermittelten Zellen in den abgehenden, kontinuierlichen Bitstrom.
- Senden, empfangen und auswerten von Zellen für den Test von Verbindungen.
Da von einer Übertragungseinrichtung im Synchronous Transfer Mode keine zu vermittelnden, bestenfalls nur zu transportierende Dienste im connectionless mode und Paket-Dienste im connection oriented mode geführt werden, besitzen Sende-und Empfangszug SZ und EZ keine Cache-Zwischenspeicher, d.h. keine Verbindung zum Koppelfeld der zweiten Art KF2.A. Auch werden Signalisierungs- und OAM-Kanäle getrennt geführt.

Im Sendezug SZ finden folgende Funktionsabläufe statt:
Die am Eingang des Sendezugs SE1 seriell ankommende, unstrukturierte Information wird in der Sendezug-Eingangsschaltung S-EINSY vom Leitungscode oder optischen Signalen in den Binärcode gewandelt und der Bittakt regeneriert. Soweit erforderlich, wird sie über einen Descrambler geführt und octet- oder mehrfach octet-weise in einem Zwischenspeicher abgelegt. Aus diesem Zwischenspeicher werden sie von einer Einrichtung abgerufen, welche die Funktionen des in den einleitend erwähnten CCITT-Empfehlungen beschriebenen Protocol Reference Model, nämlich gemäß CCITT Rec. I. 321 vom ATM Adaption Layer bis zum Physical Layer, ausführt und das Segmentation and Reassembly Protocol Data Unit (SAR-PDU) Format für ATM Adaption Layer vom Typ 2 gemäß CCITT Rec. I. 363 verwendet. Durch diese Prozedur werden jeweils 44 octets Nutzinformation in das sogenannte Payload-Feld einer ATM-Zelle verpackt. Headerinhalt und sonstige für die Prozedeur noch nötigen Vorgaben werden von der Abzweiger-Kontrolle ABZ-K bereitgestellt. Die Zellen werden vom Sendezug-Datenadapter S-AD zu den für die Vermittlung vorgesehnen Vermittlungszellzeitschlitz-Nummern von dieser Einrichtung abgerufen. Die Prozedur stellt auch sicher, daß für den Fall, daß mehr Zellen abgerufen werden als aufgefüllt werden können, das Payload-Feld nicht voll mit octets aufgefüllt und dies am Zellende in hierfür vorgesehenen Feldern angegeben ist.
Die physikalische Schnittstelle von der Sendezug-Eingangsschaltung S-EIN zum Sendezug-Datenadapter S-AD ist für die Übernahme der Zellen im Binärcode und octet oder mehrfach octetweiser paralleler Form ausgelegt.
Die vom Sendezug-Datenadapter S-AD abgerufenen Zellen werden in den folgenden Schritten vom Sendezug-Datenadapter S-AD, vom Sendezug-Speicher S-SP und von der Sendezug-Ausgangsschaltung S-AUS in der gleichen Weise behandelt, wie bei Abzweigern der ersten Art.

Es finden folgende Funktionsabläufe im Empfangszug statt:
Die vom Koppelfeld der ersten Art KF1.A am Eingang EE1 angelieferten Zellen werden durch die Empfangszug-Eingangsschaltung E-EIN, dem Empfangszug-Speicher E-SP und den Empfangszug-Datenadapter E-AD in der gleichen Weise behandelt, wie bei Abzweigern der ersten Art. Die Header bleiben jedoch unverändert. Vom Empfangszug-Datenadapter E-AD werden sie an die Empfangszug-Ausgangsschaltung E-AUSSY octet oder mehrfach octet-weise übergeben und gelangen zunächst an eine Einrichtung, welche die Funktionen des Protocol Reference Model, nämlich gemäß CCITT Rec. I. 321 vom Physical Layer bis zum ATM Adaption Layer, ausführt und das Segmentation and Reassembly Protocol Data Unit (SAR-PDU) Format für ATM Adaption Layer vom Typ 2 gemäß CCITT Rec. I. 363 verwendet. Zellen mit einem nicht vereinbarten oder unkorrigierbarem Headerinhalt werden verworfen, der Headerinhalt an die Abzweiger-Kontrolle ABZ-K übergehen. Die im Payload-Feld verpackten, gültigen octets werden in einen Zwischenspeicher abgelegt. Aus diesem Zwischenspeicher werden sie von einer Einrichtung entnommen und durch parallel/seriell Wandlung in einen kontinuierlichen Bitstrom umgesetzt. Diese Einrichtung führt auch eine eventuell nötige Taktanpassung durch, indem sie entweder von Zeit zu Zeit ein Leer-Octet einfügt oder ein Octet verwirft. Der serielle, kontinuierliche Bitstrom wird, falls vereinbart, verscrambelt und einer Codewandlung unterworfen, welche ihn in den Leitungscode oder in optische Signale überführt.

Die Steuerung ST für den in Fig. 9 gezeigten Abzweiger zweiter Art besitzt einen Taktverteiler TV. Der Taktverteiler TV hat die gleichen Funktionen wie bei einem Abzweiger erster Art. Er generiert auch die Taktrate, wie sie die Empfangszug-Ausgangsschaltung E-AUSSY für die Übertragungseinrichtung benötigt, falls diese den Takt Te nicht von der Sendezug-Eingangsschaltung S-EINSY übernimmt.

Gegenüber einer Abzweiger-Kontrolle für Abzweiger der ersten Art entfallen bei der Abzweiger-Kontrolle ABZ-K für den Abzweiger zweiter Art die Funktionen, welche für die Übernahme/Übergabe von Zellen mit Signalisierungs-und OAM Kanälen dort vorgesehen sind. Ferner entfallen alle Funktionen im Zusammenhang mit Vermittlungsvorgängen über ein Koppelfeld der zweiten Art KF2.A. Dafür hat die Abzweiger-Kontrolle ABZ-K der Sendezug-Eingangsschaltung S-EINSY einen Header zuzuweisen und fehlerhafte Header von der Empfangszug-Ausgangsschaltung E-AUSSY zu übernehmen und auszuwerten.

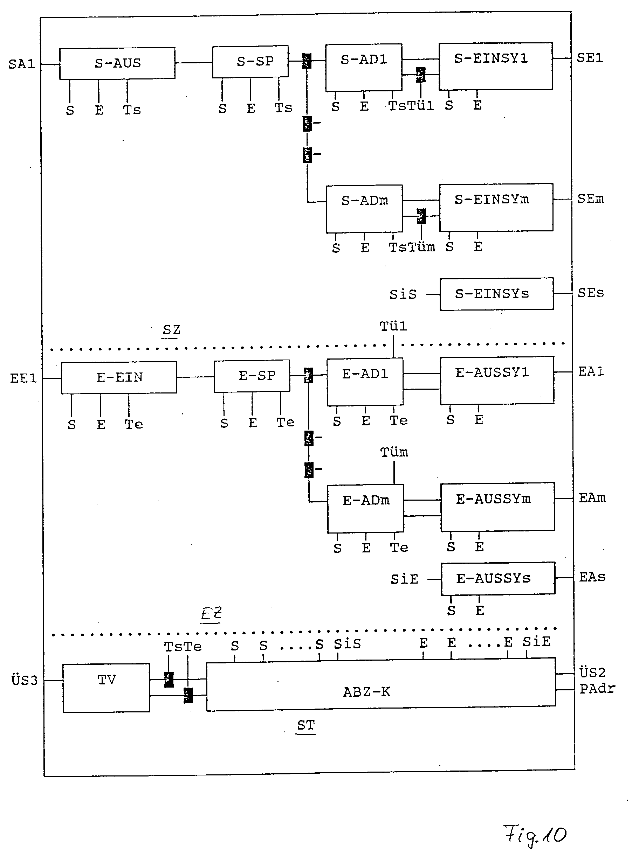

Einen Abzweiger zweiter Art für den Anschluß mehrerer Übertragungseinrichtungen zeigt die Fig. 10.
Die hauptsächlichen Funktionen dieses Abzweigertyps sind die gleichen wie bei dem in Fig. 9 dargestellen Abzweiger zweiter Art.
Der Einsatz dieses Abzweigertyps ist von Vorteil, wenn durch Multiplexeinrichtungen, die der Vermittlung vor/nachgeschaltet sind, Bitraten angeboten werden, die einer Hierarchiestufe digitaler Übertragungssysteme entsprechen, die niederer als die für einen Abzweiger zulässige, liegt. Vorraussetzung ist jedoch, daß die Summe der Bitraten auf den angeschlossenen Übertragungseinrichtungen die für einen Abzweiger dieses Typs zulässige nicht übersteigt. Sie ist mindestens im Verhältnis der Octets im Payload-Feld zur Anzahl der Octets einer Zelle, also im Verhältnis 44 zu 53, niederer als die maximale Bitrate bei Abzweigern der ersten Art. Ein derartiger Abzweiger ist mit einem Sendezug SZ, der mehrere Sendezug-Eingangsschaltungen S-EINSY1 bis S-EINSYm und Sendezug-Datenadapter S-AD1 bis S-ADm und mit einem Empfangszug EZ ausgestattet, der mehrere Empfangsdatenadapter E-AD1 bis E-ADm und Empfangszug-Ausgangsschaltungen E-AUSSY1 bis E-AUSSYm aufweist. Alle Sendezug-Datenadapter S-AD haben Zugriff auf den Sendezug-Speicher S-SP. Vom Eingangs-Speicher E-SP werden die Zellen gemäß Anweisungen auf die Empfangszug-Datenadapter E-AD1 bis E-ADm verteilt.
Dieser Abzweigertyp kann mit je einer weiteren Sendezug-Eingangsschaltung S-EINSYs und Empfangszug-Ausgangsschaltung E-AUSSYs ausgestattet sein, die über Anschlüsse SiS bzw. SiE (SiS = Signalisierung Sendezug; SiE = Signalisierung Empfangszug) direkt mit der Abzweiger-Kontrolle ABZ-K verbunden werden und nur mit einem zentralen Zeichengabekanal belegt sind. Die Informationen dieses Kanals werden an die zentrale Netz-Kontroll-Komponente ZNKK weitergeleitet bzw. von dort übernommen.
Der Taktverteiler TV generiert auch die für die Empfangszug-Ausgangsschaltung E-AUSSY1 bis E-AUSSYm nötigen niederen Taktfrequenzen, falls sie die Empfangszug-Ausgangsschaltungen nicht von den zugeordneten Sendezug-Eingangsschaltungen S-EINSY1 bis S-EINSYm über die Anschlüsse Tü1 bis Tüm übernehmen.
Die Funktionen der Abzweiger-Kontrolle ABZ-K sind insofern erweitert, als mehrere Sendezug-Eingangsschaltungen S-EINSY1 bis S-EINSYm, Sendezug-Datenadapter S-AD1 bis S-ADm und Empfangszug-Datenadapter E-AD1 bis E-ADm sowie Empfangszug-Ausgangsschaltungen E-AUSSY1 bis E-AUSSYm zu bedienen sind. Ferner werden von der Abzweiger-Kontrolle ABZ-K Zellen ohne Informationsinhalt im Payload-Feld, wenn solche Zellen von der Sendezug-Eingangsschaltung S-EINSY übergeben werden, vor der Weiterleitung an die zentrale Netz-Kontroll-Komponente ZNKK verworfen.

Für bestimmte Anwendungen, z.B. für Video-Verteildienste, die sich des Synchrnous Transfer Modes bedienen, können Abzweiger für den Anschluß nur einseitig gerichteter Übertragungseinrichtungen vorteilhaft sein. Dann reicht es aus, wenn ein Abzweigertyp nur mit einem Sendezug und einer Abzweiger-Kontolle und der andere Typ nur mit einem Empfangszug und einer Abzweiger-Kontrolle ausgestattet ist. Der Sendezug kann auch mit mehr als einer Sendezug-Eingangsschaltung und der Empfangszug mit mehr als einer Empfangszug-Ausgangsschaltung versehen sein, wenn die Bitraten der einzelnen Übertragungseinrichtungen die maximal für einen Abzweiger der zweiten Art zulässige Bitrate nicht überschreiten.

Werden an eine Vermittlungseinrichtung auch Endeinrichtungen angeschlossen, so ist für bestimmte Betriebszustände eine akustische, visuelle oder audiovisuelle Signalgabe nötig. Die Signale müssen an geeigneter stelle erzeugt und der Endeinrichtung zugeleitet werden. Hierfür wird ein Abzweiger für spezielle Anwendungen mit nur einseitig gerichteter Übertragung, d.h. mit Sendezug und Abzweiger-Kontrolle vorgeschlagen, der anstelle einer Sendezug-Eingangsschaltung einen Generator für Ansagen, Töne, Stand- und Bewegtbildsignale enthält. Der Generator erhält von der zentralen Netz-Kontroll-Komponente ZNKK über die Abzweiger-Kontrolle ABZ-K die Anweisungen, welche dieser Signale, in ATM-Zellen verpackt, mit welchem Header und zu welchem Zeitpunkt gesendet werden müssen.
Die Zellen werden in binärer Form octet oder mehrfach octetweise vom Generator an den Sendezug-Datentadapter übergeben und im weiteren Verlauf wie bei Abzweigern erster Art für einseitig gerichtete Übertragungseinrichtungen, behandelt.

## Patentansprüche

1. Vermittlungseinrichtung für digitale Signale im asynchronen und synchronen Übertragungsmode, dadurch gekennzeichnet,
daß ein Koppelfeld erster Art (KF1.A) und ein Koppelfeld zweiter Art (KF2.A) vorhanden sind,
daß das Koppelfeld erster Art (KF1.A) digitale Signale, die zu Diensten gehören, welche für den Transfer zwischen Teilnehmern Prozeduren zur Herstellung einer durchgehenden Verbindung benötigen- connection oriented mode genannt -, im synchronen Übertragungsmode vermittelt und daß das Koppelfeld zweiter Art (KF2.A) digitale Signale, die zu Diensten gehören, welche den Tranfer zwischen Teilnehmern ohne Prozeduren zur Herstellung einer durchgehenden Verbindung ermöglichen - connectionless mode genannt -, im asynchronenen Übertragungsmode vermittelt.

2. Vermittlungseinrichtung nach Anspruch 1, dadurch gekennzeichnet,
daß Abzweiger (ABZ1 ... ABZn) einerseits mit Ein- und Ausgängen (KE1.1 ... KEx.r, SV-E1 ... SV-En, KA1.1 ... KAx.r, SV-A1 ... SV-An) der beiden Koppelfelder (KF1.A, KF2.A) und andererseits mit Endeinrichtungen, anderen Vermittlungseinrichtungen oder anderen Netzkomponenten verbunden sind, daß die Abzweiger (ABZ1 ... ABZn) aufgrund von Informationen, die insbesondere in Headern der ankommenden zu vermittelnden Signalzellen übertragen werden, die Signalzellen entweder dem Koppelfeld erster Art (KF1.A) oder dem Koppelfeld zweiter Art (KF2.A) zur Vermittlung zuleiten und andere Zellen, welche gemäß einer ihnen eigenen Kennzeichnung Signalisierungs- oder Überwachungsinformation enthalten, an eine sämtliche Komponenten der Vermittlungseinrichtung steuernde und kontrollierende zentrale Netz-Kontroll-Komponente (ZNKK) weiterleiten
und daß die Abzweiger (ABZ1 ... ABZn) aus den Koppelfeldern (KF1.A, KF2.A) und der zentralen Netz-Kontroll-Komponente (ZNKK) kommende Vermittlungszellen zu einem abgehenden Bitstrom zusammenfassen und zur Übertragung aufbereiten.

3. Vermittlungseinrichtung nach Anspruch 1 oder 2, dadurch gekennzeichnet,
daß die zentrale Netz-Kontroll-Komponente (ZNKK) mit einem zentralen Taktgenerator (ZTG) und mehreren Datenverarbeitungseinrichtungen (AST, KSV, ESV) ausgestattet ist, daß die Datenverarbeitungseinrichtungen untereinander mit einem Übertragungssystem einer ersten Art (ÜS1) verbunden sind,
daß das Übertragungssystem der ersten Art (ÜS1) die Verbindung zum Koppelfeld der zweiten Art (KF2.A) herstellt,
daß die Datenverarbeitungseinrichtungen (AST, KSV, ESV) mit einem Übertragungssystem einer zweiten Art (ÜS2) verbunden sind,
daß die Datenverarbeitungseinrichtungen (AST, KSV, ESV) so konzipiert sind, daß sie aus Signalisierungsinformationen, welche sie über die Übertragungseinrichtungen der ersten und zweiten Art (ÜS1, ÜS2) sowie von anderen Signalisierungsnetzen erhalten, die Paramenter zur räumlichen und zeitlichen Vermittlung von Signalzellen über das Koppelfeld der ersten Art (KF1.A) erstellen und sie diese Information über das Übertragungssystem der zweiten Art (ÜS2) dem Koppelfeld der ersten Art (KF1.A) und den betroffenen Abzweigern (ABZ1 ... ABZn) mitteilen, daß die Datenverarbeitungseinrichtungen (AST, KSV, ESV) außerdem Gebührenverwaltung, Geräteüberwachungen und andere Verwaltungsprozesse sowie die Kommunikation auf den Signalisierungskanälen mit externen Einrichtungen durchführen
und daß der Zentrale Taktgenerator (ZTG) Bittakte sowie Zeitmarken und Zählerstände mittels eines Übertragungssystems einer dritten Art (ÜS3) an alle Komponenten der Vermittlungseinrichtung verteilt.

4. Vermittlungseinrichtung nach Anspruch 1 oder 2, dadurch gekennzeichnet, daß das Koppelfeld der ersten Art (KF1.A) ein mehrstufiges Raumkoppelfeld mit synchroner Zeitvielfachvermittlung ist,
daß in jeder Stufe des Koppelfeldes (KF1.A) mehrere Koppelfeldblöcke (KFB) vorhanden sind, von denen jeder mit Eingangsspeichern (E-SP) und Ausgangsspeichern (S-SP) für die Aufnahme von Vermittlungszellen ausgestattet ist, daß die Ausgänge der Eingangsspeicher (E-SP) in jedem Koppelfeldblock (KFB) zu jedem Vermittlungszellzeitschlitz in einer anderen Kombination mit einem oder mehreren Eingängen der Ausgangsspeicher (S-SP) des Koppelfeldblocks (KFB) verbunden werden können,
daß die Eingänge (KE1.) der ersten Koppelfeldstufe mit ersten Ausgängen (SA1.) der Abzweiger (ABZ1 ... ABZn) und die Ausgänge der Koppelfeldblöcke der ersten und jeder weiteren Koppelfeldstufe mit Eingängen von Koppelfeldblöcken der jeweils folgenden Koppelfeldstufe und die Ausgänge (KA.1) der letzten Koppelfeldstufe mit Eingängen (EE1) der Abzweiger verbunden sind,
daß ein Koppelfeld-Einsteller (KFE) den Koppelfeldblöcken (KFB) die Information für durchzuschaltende Wege mitteilt, daß der Koppelfeld-Einsteller (KFE) die Einstellinformation für jeden durch das gesamte Koppelfeld (KF1.A) durchzuschaltenden Pfad über das Übertragungssystem der zweiten Art (ÜS2) erhält,
daß die betroffenen Koppelfeldblöcke (KFB) die erfolgte Einstellung quittieren,
daß der Koppelfeld-Einsteller (KFE) die von dem Übertragungssystem dritter Art (ÜS3) empfangenen Taktsignale, Zellen- und Vermittlungsrahmen- und Zellzeitschlitz-Beginnzeichen sowie deren fortlaufende Nummern an alle Koppelfeldblöcke (KFB) verteilt und daß die Quittungen und Überwachungsmeldungen, welche die Adresse des Koppelblocks (KFB) enthalten, an den Koppelfeld-Einsteller (KFE) übergeben werden, der sie über das Übertragungssystem zweiter Art (ÜS2) an die zentrale Netz-Kontroll-Komponente (ZNKK) weiterleitet.

5. Vermittlungseinrichtung nach Anspruch 1 oder 2, dadurch gekennzeichnet,
daß das Koppelfeld der zweiten Art (KF2.A) mindestens zwei Datenverarbeitungseinrichtungen (VSV) besitzt, daß die Datenverarbeitungseinrichtungen (VSV) mittels eines Übertragungssystems einer ersten Art (ÜS1') miteinander und mit einer Einrichtung, die als Datenbrücke (BRI) zur zentralen Netz-Kontroll-Komponente (ZNKK) dient, verbunden sind,
daß die Datenverarbeitungeeinrichtungen (VSV) Verbindungen zu zweiten vermittlungsseitigen Aus- und Eingängen (SA2., EE2.) der Abzweiger (ABZ1 ... ABZn) ermöglichen und mit Ein- und Ausgangsspeichern verbunden sind,
daß die Eingangsspeicher zur Aufnahme ankommender Vermittlungszellen dienen,
daß die Datenverarbeitungseinrichtungen (VSV) die Vermittlungszellen einzeln den Eingangsspeichern entnehmen, aus Vermittlungszellen, welche Ziel- und Absenderadresse enthalten, diese und mindestens ein Datenfeld, welches die Zugehörigkeit weiterer Vermittlungszellen zu einem Cluster angibt, kopieren und alle Zellen mit gleichem Datenfeld mit der Adresse des gleichen Abzweigers (ABZ1 ... ABZn) versehen, der in der Lage ist, das Ziel der Vermittlungszellen gemäß Zieladresse zu erreichen
und daß die Datenverarbeitungseinrichtungen (VSV) dafür sorgen, daß die so markierten Vermittlungszellen in den Ausgangsspeichern abgelegt und bei freier Verbindung zum adressierten Abzweiger (ABZ1 ... ABZn) an diesen übergeben werden und die Anzahl vermittelter Zellen und deren Absender- und Zieladresse zur Gebührenberechnung sowie alle Arten von Fehler- und Störungsmeldungen an die zentrale Netz-Kontroll-Komponente (ZNKK) übergeben werden.

6. Vermittlungseinrichtung nach Anspruch 1 oder 2, dadurch gekennzeichnet,
daß die Abzweiger (ABZ1 ... ABZn) aus einem Sendezug (SZ), einem Empfangszug (EZ) und einer Steuerung (ST) mit Taktverteiler (TV) und Abzweiger-Kontrolle (ABZ-K) besteht,
daß eine Eingangsschaltung (E-EIN) des Empfangszuges (EZ) die ankommenden ATM-Zellen (Vermittlungszellen im asynchronen Transfer Mode) gemäß ihres Headerinhaltes entweder zur Vermittlung über das Koppelfeld der ersten oder der zweiten Art (KF1.A, KF2.A) oder zur Weiterleitung an die zentrale Netz-Kontroll-Komponente (ZNKK) verteilt, daß Schaltungseinrichtungen (S-AD) des Sendezugs (SZ) ATM-Zellen, die über das Koppelfeld der ersten Art vermittelt werden sollen, zuvor durch Zwischenspeicherung unter geringstmöglicher Verzögerung in die für ihre Vermittlung vorgesehenen Vermittlungszellzeitschlitze des synchronen Vermittlungsrahmens einschreiben und an das Koppelfeld der ersten Art (KF1.A) weiterleiten und ATM-Zellen, die über das Koppelfeld der zweiten Art (KF2.A) vermittelt werden sollen, direkt dorthin weiterleiten und ATM-Zellen, die der zentralen Netz-Kontroll-Komponente (ZNKK) zugeleitet werden sollen, über die Abzweiger-Kontrolle (ABZ-K) leiten,
daß die Eingangsschaltung (E-EIN) des Empfangszuges (EZ) abgehende Vermittlungszellen von den Koppelfeldern (KF1.A, KF2.A) und der zentralen Netz-Kontroll-Komponente (ZNKK) zusammenfaßt und Schaltungseinrichtungen (E-AUS) zuführt, welche die Anpassung an den Bittakt am Ausgang des Empfangszuges (EZ) vornehmen,
daß die Abzweiger-Kontrolle (ABZ-K) die vorangehend aufgeführten Vorgänge steuert und überwacht,
daß die Abzweiger-Kontrolle (ABZ-K) über das Übertragungssystem zweiter Art (ÜS2) mit der zentralen Netz-Kontroll-Komponete (ZNKK) in Verbindung steht und daß der Taktverteiler (TV) alle internen Takt- und Vermittlungsrahmensignale bereitstellt, der hierzu entsprechende Signale über seinen Anschluß an das Übertragungssystem der dritten Art (ÜS3) vom Zentralen Taktgenerator (ZTG) der zentralen Netz-Kontroll-Komponente (ZNKK) erhält.

7. Vermittlungseinrichtung nach Anspruch 1, 2 oder 6, dadurch gekennzeichnet,
daß die Eingangsschaltung (S-EIN) des Sendezugs (SZ) der Abzweiger (ABZ1 ... ABZn) kontinuierlich einlaufende Signale gemäß den Regeln für die Packetierung von ATM-Zellen in die Payload-Bereiche solcher Zellen verpackt, die sodann wie ATM-Zellen vermittelt werden
und daß die Ausgangsschaltung (S-AUS) des Sendezugs (SZ) den inversen Prozeß durchführt und die Anpassung an den in abgehender Richtung verwendeten Bittakt vornimmt.
